(19)

Europäisches
Patentamt
European
Patent Office
Office européen
des brevets

(11) **EP 4 006 785 A1**

(12) **EUROPEAN PATENT APPLICATION**

(43) Date of publication:
**01.06.2022 Bulletin 2022/22**

(21) Application number: **20306458.9**

(22) Date of filing: **27.11.2020**

(51) International Patent Classification (IPC):
***G06N 3/08*** *(2006.01)*

(52) Cooperative Patent Classification (CPC):
**G06N 3/084**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Naver Corporation**
**Seongnam-si, Gyeonggi-do 13561 (KR)**

(72) Inventors:
- **LARLUS, Diane**
 **38700 La Tronche (FR)**
- **ROGEZ, Gregory**
 **38610 Gières (FR)**
- **VOLPI, Riccardo**
 **38000 Grenoble (FR)**

(74) Representative: **Grünecker Patent- und**
**Rechtsanwälte**
**PartG mbB**
**Leopoldstraße 4**
**80802 München (DE)**

(54) **METHOD FOR LEARNING REPRESENTATIONS LESS PRONE TO CATASTROPHIC FORGETTING**

(57)    A computer-implemented method for training a neural network model for sequentially learning a plurality of domains associated with a task is disclosed. The computer-implemented method comprises determining at least one set of auxiliary model parameters by simulating at least one first optimization step based on a set of current model parameters and at least one auxiliary domain, wherein the at least one auxiliary domain is associated with a primary domain comprising one or more data points for training a model, determining a set of primary model parameters by performing a second optimization step based on the set of current model parameters and the primary domain and based on the at least one set of auxiliary model parameters and at least one of the primary domain and the at least one auxiliary domain, and updating the model with the set of primary model parameters.

FIG. 1

EP 4 006 785 A1

## Description

### Technical Field

The present disclosure relates to a learning method for a model. In particular, the present disclosure relates to lifelong learning.

### Background

Modern machine learning approaches can reach super-human performance in a variety of isolated tasks at the expense of versatility. When confronted with a plurality of new tasks or new domains, neural networks have trouble adapting, or adapt at the cost of forgetting what they had been initially trained for. This phenomenon, which has been observed for decades (David Lopez-Paz and Marc'Aurelio Ranzato: "Gradient Episodic Memory for Continual Learning", in Proceedings of Advances in Neural Information Processing Systems (NIPS), 2017), is known as catastrophic forgetting. Directly facing this issue, lifelong learning or continual learning approaches are designed to continuously learn from new information without forgetting the past. Most of these approaches prevent new learning from interfering catastrophically with the old learning by using a memorization process that stores past information, or by dynamically modifying the architectures to capture additional knowledge. In practice, these solutions may not be appropriate when retaining data is not allowed (e.g., due to privacy concerns) or when working under strong memory constraints (e.g., in mobile applications).

Accordingly, there is a need in the art for learning representations that are inherently robust against catastrophic forgetting, and do not require any architecture modification, information storage, or complex heuristics to remember old patterns. More concretely, in view of the problem of continual and supervised adaptation to new domains, there is a need for a model that learns a given task and adapt to conditions, which constantly change throughout its lifespan. This is of particular interest when deploying applications to real-world scenarios where a model is expected to adapt and can encounter different domains from the one observed at training time.

It is therefore desirable to provide an improved method for training a model that overcomes the above disadvantages of the prior art. Specifically, it is desirable to provide an efficient training method for a model that accurately performs on old data domains when being fine-tuned to new domains and/or not having access to the old domains during the fine-tuning.

### Summary

To address the challenges in the state of the art, a novel approach for continual adaptation is provided. The present disclosure presents methods and systems for training a model.

In an embodiment, a computer-implemented method for training a model comprises determining at least one set of auxiliary model parameters by simulating at least one first optimization step (e.g. at least one first gradient descent step) based on a set of current model parameters and at least one auxiliary domain, wherein the at least one auxiliary domain is associated with a primary domain comprising one or more data points for training a model, determining a set of primary model parameters by performing a second optimization step (e.g. a second gradient descent step) based on the set of current model parameters and the primary domain and based on the at least one set of auxiliary model parameters and at least one of the primary domain and the at least one auxiliary domain, and updating the model with the set of primary model parameters.

By determining a set of primary model parameters based at least in part on auxiliary model parameters, an efficient method for training a robust model whose performance drop on old domains is mitigated when being fine-tuned to new domains and without having access to the old domains during the fine-tuning is provided. Retaining data may not be allowed (e.g., due to privacy or security concerns) or when working under strong memory constraints (e.g., in mobile applications).

According to aspects, the method further comprises generating the at least one auxiliary domain from the primary domain. The generating of the at least one auxiliary domain from the primary domain may comprise modifying the one or more data points of the primary domain via data manipulation. The at least one auxiliary domain may comprise the one or more modified data points. The generating of the at least one auxiliary domain from the primary domain may comprise selecting the one or more data points from the primary domain. The data manipulation may be performed automatically. The modifying of the one or more data points of the primary domain via data manipulation may comprise automatically and/or randomly selecting one or more transformations from a set of transformations, wherein each auxiliary domain of the at least one auxiliary domain is defined by one or more respective transformations of the set of transformations. The data manipulation may comprise at least one image transformation, and wherein the at least one image transformation comprises at least one of a photometric and a geometric transformation.

By generating the at least one auxiliary domain from the primary domain, an efficient method is provided that can simulate additional (auxiliary) domains based on a current domain. The additional (auxiliary) domains allow training of a model that accurately performs on old data domains when being fine-tuned to new domains without having access to the other domains than the current domain. This saves memory space, since no information storage regarding the old training or model, no storage of data points of domains that have previously been used for training, and no complex heuristics to remember old patterns is required.

In an aspect, a loss function is associated with the second optimization step and comprises (i) a first loss function associated with the set of current model parameters and the primary domain, and at least one of (ii) a second loss function associated with the at least one set of auxiliary model parameters and the primary domain, and (iii) a third loss function associated with the at least one set of auxiliary model parameters and the at least one auxiliary domain. A set of auxiliary model parameters of the at least one set of auxiliary model parameters may minimize a respective loss associated with a respective auxiliary domain of the at least one auxiliary domain with respect to the set of current model parameters. The set of primary model parameters may minimize a loss associated with the at least one set of auxiliary model parameters and at least one of the primary domain and the at least one auxiliary domain with respect to the current model parameters.

In an aspect, the model may be initialized, wherein the initializing the model comprises setting model parameters of a pre-trained model as initial model parameters for the model to fine-tune the pre-trained model. The steps of determining at least one set of auxiliary model parameters, determining a set of primary model parameters and updating the model may be repeated until at least one of a gradient descent step size for the second optimization is below a threshold and a maximum number of gradient descent steps is reached. A gradient descent step is proportional to a gradient (or approximate gradient) of a loss function at a current point.

According to aspects, the model may be trained on data points of the primary domain being a first primary domain in a first step, and the trained model may subsequently be trained on data points of a second primary domain in a second step without accessing data points of the first primary domain in the second step. The one or more data points of the primary domain may comprise or may be divided into a first set of data points for training the model, a second set of data points for validating the model and a third set of data points for testing the model. The model may be trained by empirical risk minimization, ERM.

In a further embodiment, a computer-readable storage medium having computer-executable instructions stored thereon is provided. When executed by one or more processors, the computer-executable instructions perform the method for training a model described above.

In a further embodiment, an apparatus comprising processing circuitry is provided. The processing circuitry is configured to perform the method for training a model described above.

The following detailed description and accompanying drawings provide a more detailed understanding of the nature and advantages of the present invention.

**Brief Description of the Figures**

The accompanying drawings are incorporated into and form a part of the specification for the purpose of explaining the principles of the embodiments. The drawings are not to be construed as limiting the embodiments to only the illustrated and described embodiments of how they can be made and used. Further features and advantages will become apparent from the following and more particularly from the description of the embodiments, as illustrated in the accompanying drawings, wherein:

   **FIG. 1** illustrates a process flow diagram of a method for training a model in accordance with at least one embodiment,

   **FIG. 2** illustrates an example life cycle of a model when training for continual domain adaptation,

   **FIGS 3A** and **3B** illustrates test results in accordance with embodiments, and

   **FIG. 4** illustrates an example architecture in which the disclosed methods may be performed.

**Detailed Description**

Described herein are systems and methods for training a model. For purposes of explanation, numerous examples and specific details are set forth in order to provide a thorough understanding of the described embodiments. Embodiments as defined by the claims may include some or all of the features in these examples alone or in combination with other features described below, and may further include modifications and equivalents of the features and concepts described herein. The illustrative embodiments will be described with reference to the drawings wherein elements and structures are indicated by reference numbers. Further, where an embodiment is a method, steps and elements of the method may be combinable in parallel or sequential execution. As far as they are not contradictory, all embodiments described below can be combined with each other.

Lifelong learning, also commonly referred to as continual learning, can involve continuously learning new classes, new tasks, or new domains. In all cases, the corresponding approaches try to avoid forgetting previously learned patterns throughout the lifespan of a model. The latter case relates to scenarios where the domain sequentially changes but the task remains the same.

Conventional learning approaches lead to fragile models, which are prone to drift when exposed to samples of a different nature - the well-known catastrophic forgetting issue. A new meta-learning strategy, which both limits catastrophic forgetting and facilitates adaptation to new domains, is disclosed. Transformations, such as image transformations, can be used as a good proxy for simulating or generating meta-domains. Meta-learning generally relies on a series of meta-train and meta-test splits, and the optimization process enforces that a few gradient descent steps on the meta-train splits lead to a generalization performance on the meta-test.

Lifelong learning can be provided by training a model with a loss that penalizes catastrophic forgetting and encourages adaptation to new domains without replaying old data or increasing the model capacity over time. A two-fold regularizer is disclosed that, on the one hand, encourages models to remember previously encountered domains when exposed to new ones (by means of optimization updates, such as gradient descent updates, on these tasks), and on the other hand, encourages an efficient adaptation to such domains. In contrast, prior art solutions that rely on meta-learning to handle continual learning problems require access to either old memories or training data streams.

A meta-learning and a regularization strategy is disclosed that forces a model to train for a task of interest on a current domain, while learning to be resilient to potential domain shifts. To achieve this, optimization steps, such as gradient descent steps, can be simulated to optimize objectives slightly different from a main objective, and to encourage a loss associated with the current domain to remain low, thus, avoiding catastrophic forgetting.

While meta-learning approaches require access to a number of different meta-tasks (or meta-domains), in some scenarios this access is not possible or allowed and only access to samples from the current domain is allowed for training a model. To overcome this issue, artificial meta-domains that are automatically produced by perturbing samples from an original distribution with data transformations is disclosed. These meta-domains may be obtained using standard image manipulations.

Embodiments allow training a model to efficiently adapt to new domains. Both resilience to catastrophic forgetting and efficient adaptation are tackled by the disclosed meta-learning strategy. Models, such as neural networks, can be trained by optimizing an objective that takes into account (i) the loss associated with the current domain, (ii) the loss associated with the current domain after some gradient updates on new artificial domains, and (iii) a term to foster adaptation.

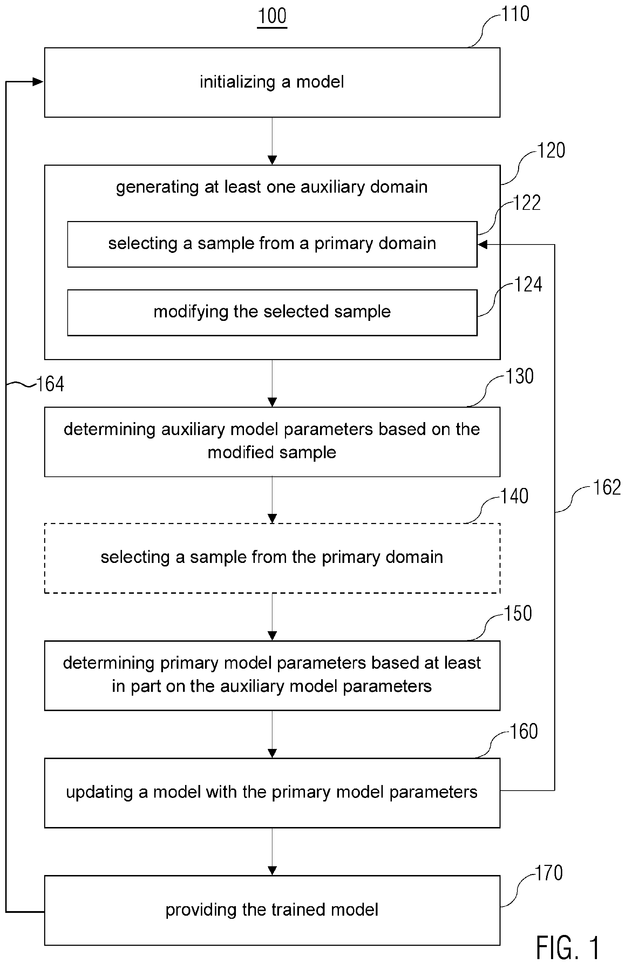

**Figure 1** is a process flow diagram of an exemplary method 100 for training a model in accordance with an embodiment. The method 100 for training a model or a neural network model may be a method for learning a task in a plurality of domains sequentially provided during training.

At step 110, the method comprises initializing the model. The model may be initialized by setting model parameters of a pre-trained model as initial model parameters for the model to fine-tune the pre-trained model. Alternatively, the model may be initialized by setting random numbers for the model parameters of the model. Model parameters may comprise weights and/or biases of the model.

In step 120, at least one auxiliary domain is generated from the primary domain. For example, generating the at least one auxiliary domain from the primary domain may comprise the step 122 of selecting one or more data points from the primary domain. The selected one or more data points may be modified via data manipulation in step 124. For example, all data points of the primary domain may be selected and modified prior to the following steps. Alternatively, only some of the data points of the primary domain may be selected and modified prior to the following steps. Specifically, only the data points of the primary domain that are used for a current optimization step are modified, and new or different data points of the primary domain are modified subsequently prior to a next optimization step. The at least one auxiliary domain comprises the one or more modified data points. The step of modifying the one or more data points of the primary domain via data manipulation may comprise automatically and/or randomly selecting one or more transformations from a set of transformations. Each auxiliary domain of the at least one auxiliary domain may be defined by one or more respective transformations of the set of transformations. For example, a plurality of basic transformations may be combined to obtain modified data points for an auxiliary domain defined by the combination of the plurality of basic transformations. The data manipulation or modification may be performed automatically. Additionally or alternatively, the data manipulation comprises at least one image transformation, and which comprises at least one of a photometric and a geometric transformation. For example, the set of transformations may comprise at least one of a brightness transformation, a color transformation, a contrast transformation, a RGB-rand transformation, a solarize transformation, a grayscale transformation, a rotate transformation, a Gaussian noise transformation, and a blur transformation.

In step 130, at least one set of auxiliary model parameters are determined by simulating at least one first optimization step, such as at least one gradient descent step, based on a set of current model parameters and at least one auxiliary domain. The at least one auxiliary domain is associated with the primary domain comprising the one or more data points. The data points of the primary domain and the modified data points comprised in the auxiliary data domain are used for the training of the model. For example, the at least one set of auxiliary model parameters may be determined based a set of current model parameters and one or more data points, such as a single sample or a batch of samples, of the auxiliary domain. Simulating at least one first optimization step may mean that the regions, defined by the at least one set of auxiliary model parameters, in the weight/parameter space are evaluated to calculate loss values associated with the primary task. The at least one set of auxiliary model parameters are not actually set as new model parameters of the model.

In optional step 140, a second sample or batch of samples is selected for a second optimization step. The second sample or batch of samples may be different from the one or more data points selected in step 122. Alternatively, the second sample or batch of samples may comprise the data points selected in step 122. The same data points selected in step 122 can be used for the second optimization step.

In step 150, a set of primary model parameters is determined based at least in part on the auxiliary model parameters. In particular, the set of primary model parameters may be determined by performing a second optimization step, such as a gradient descent step based on the set of current model parameters and the primary domain and based on the at least one set of auxiliary model parameters and at least one of the primary domain and the at least one auxiliary domain.

A loss function may be associated with the second optimization or gradient descent step. The loss function may comprise (i) a first loss function associated with the set of current model parameters and the primary domain and at least one of (ii) a second loss function associated with the at least one set of auxiliary model parameters and the primary domain and (iii) a third loss function associated with the at least one set of auxiliary model parameters and the at least one auxiliary domain.

A set of auxiliary model parameters of the at least one set of auxiliary model parameters minimizes a respective loss associated with a respective auxiliary domain of the at least one auxiliary domain with respect to the set of current model parameters, and the set of primary model parameters minimizes a loss associated with the at least one set of auxiliary model parameters and at least one of the primary domain and the at least one auxiliary domain with respect to the current model parameters.

The data points or samples for the optimizations steps may be identically and independently distributed samples or data points. For example, a first sample or a first batch of samples may be selected from the auxiliary domain for step 130 comprising the determining at least one set of auxiliary model parameters. A second sample or a second batch of samples may be selected from the primary domain for the determining a set of primary model parameters, as well as at least one of a third sample or a third batch of samples selected from the primary domain and a fourth sample or a fourth batch of samples selected from the at least one auxiliary domain. Some or all of the first, second and third samples or batches of samples may be the same or different.

In step 160, the model comprising the current model parameters is updated with the set of determined primary model parameters. Arrow 162 indicates that at least some steps are repeated during the training of the model. For example, the steps 130, 150 and 160 are repeated until at least one of a step size for the second optimization is below a threshold and a maximum number of steps is reached. Additionally, the steps 122 and 124 may also be repeated to generate a new and/or different sample or batch of samples comprising modified data points of the primary domain for a subsequent optimization step. Alternatively, when all data points of the primary domains are modified prior to step 130, a step of selecting a new and/or different sample or batch of samples from the auxiliary domain may be repeated until at least one of a step size for the second optimization is below a threshold and a maximum number of steps is reached.

In step 170, the training is finished and the updated model parameters obtained in the last step 150 define the trained model. Method 100 illustrates a training on one primary domain, but the model can subsequently be trained on further and/or different primary domains. For example, the model may be trained on the one or more data points of the primary domain being a first primary domain in a first stage, and, as shown by arrow 164, the trained model may subsequently be trained or fine-tuned on data points of a second primary domain in a second stage without accessing data points of the first primary domain in the second stage. The training in the second stage and/or any subsequent stage after that may be performed according to the method 100. The model may be trained by empirical risk minimization, ERM.

The one or more data points of the primary domain may be divided into a first set of data points for training the model, a second set of data points for validating the model and a third set of data points for testing the model.

The method 100 allows for continual domain adaptation and mitigates the performance drop of a model on past domains while facing new ones. Transformations can be used to efficiently generate data points that compose automatically produced meta-domains. Experiments show that the disclosed meta-learning strategy improves over simply using these data points in a standard data augmentation fashion.

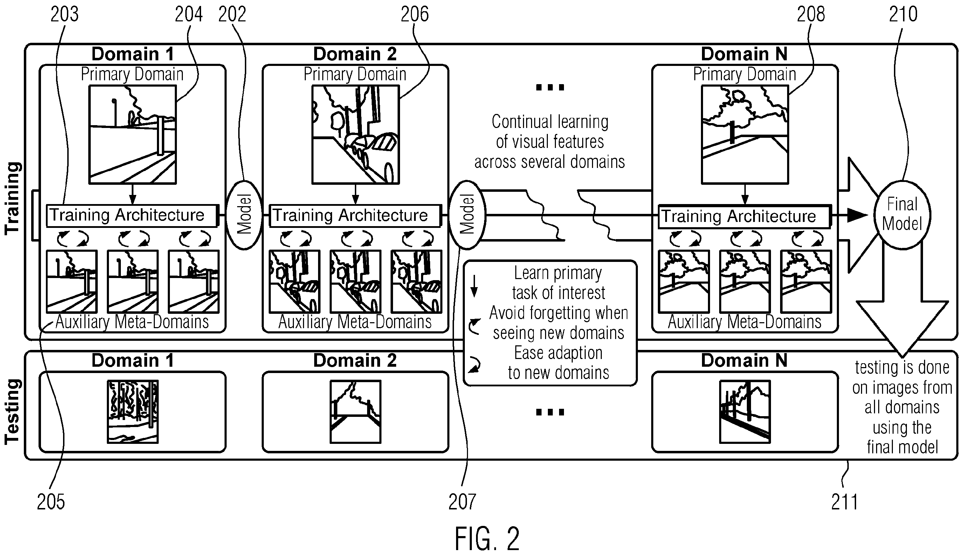

**Figure 2** illustrates a graphical overview of a life cycle of a model that is used for continuous learning. The model 202 is trained by sequentially exposing the model to a series of different domains 204 - 208. A domain may comprise a plurality of labeled images. The training may comprise meta-learning to overcome catastrophic forgetting. For example, a regularizer may penalize the loss associated with a current domain 204 when the model 202 is transferred to new domains (e.g. Primary Domain 204 associated with model 202, Primary Domain 206 associated with model 207, and Primary Domain 208 associated with model 210), while also easing adaptation, and can be used during the training. The need for additional sources during training, which characterizes meta-learning algorithms, can be overcome by relying on artificial auxiliary domains, crafted via simple data transformations. In a variety of computer vision tasks, experiments show that models trained in accordance with embodiments of the present invention are less prone to forgetting when transferred to new domains, without either replaying old samples or increasing the model capacity over time.

**Figure 2** illustrates the life cycle of a model when training for continual domain adaptation. At every newly encountered domain (e.g., Domain 1, Domain 2, ..., Domain N), the training architecture method 203 according to an embodiment (e.g., set out as in Figure 1 and Algorithm 1 below) is applied to the training set of that domain (e.g., Primary Domain 204) and on the generated auxiliary meta-domains (e.g., Auxiliary Meta-Domains 205). The final model (e.g., Final Model 210) is evaluated on test images from all the encountered domains (e.g., test images 211) to evaluate resilience to catastrophic forgetting. Specifically, as shown in Figure 2, a model is sequentially trained for the task of visual feature recognition of streets across multiple domains. At a first stage, the primary domain of streets in sunny weather 204 is trained, followed in subsequent stages by the primary domain of streets in rainy weather 206 and the primary domain of streets in foggy weather 208. The Final Model 210, though sequentially trained independently for each additional primary domain, is adapted to perform the task for each domain.

Generally, at each stage of training (as shown in Figure 1 at 164), a model (e.g., Model 202) trained earlier on primary domains (e.g., Primary Domain 204) may be sequentially trained or fine-tuned (e.g., Model 207) on additional primary domains (e.g., Primary Domains 206 and 208) without accessing the earlier trained primary domains (e.g., Primary Domain 204), where the model trained at each stage is adapted to carry out a task associated with the earlier trained primary domain and any additional trained primary domain. Advantageously, the training method shown in Figures 1 and 2 prepares a model to be more resilient to catastrophic forgetting of earlier trained primary domains as additional trained primary domains are sequentially added independent of earlier trained primary domains using auxiliary meta-domains associated with each primary domain. Specifically, as shown in Figure 2, auxiliary meta-domains 205 associated with primary domain 204 are used to train the model 202 in advance of any subsequent training of additional Primary Domain 206 so that the model 207 is resilient to catastrophic forgetting of earlier trained Primary Domain 204, when trained on Primary Domain 206 independent of Primary Domain 204, such that the resulting model 207 is adapted to perform a task in both Primary Domains 204 and 206. A model $M_\theta$ such as a neural network or a deep neural network, can be trained to solve a task $\mathcal{T}_0$, relying on some data points that follow a distribution $\mathcal{P}_0$. In practice, this distribution is unknown, but a set of samples

$$S_0 \sim \mathcal{P}_0$$

is known. The model can be trained with supervised learning and $m$ training samples $S_0 = \{(x_i, y_i)\}_{i=1}^{m}$, where $x_i$ and $y_i$ respectively represent a data sample or data point and its corresponding label. The model can be trained by empirical risk minimization (ERM), optimizing a loss

$$\mathcal{L}_{\mathcal{T}_0}(\theta).$$

For example, for the supervised training of a multi-class classifier, this loss can be the cross-entropy between the predictions of the model $\hat{y}$ and the ground-truth annotations $y$.

$$\theta^*_{\mathcal{T}_0} = \min_{\theta} \left\{ \mathcal{L}_{\mathcal{T}_0}(S_0; \theta) := -\frac{1}{m} \sum y_i^T \log \hat{y}_i \right\} \qquad (1)$$

While neural network models trained via ERM (carried out via gradient descent) have been very effective in a broad range of problems, they are prone to forget about their initial task when fine-tuned on a new one, even if the two tasks appear very similar at first glance.

In practice, this means that a model $M_0$ with model parameters

$$\theta^*_{\mathcal{T}_0}$$

trained on a first task $\mathcal{T}_0$ as a starting point to train for a different task $\mathcal{T}_1$, the newly obtained model $M_1$ with model parameters

$$\theta^*_{\mathcal{T}_0 \to \mathcal{T}_1}$$

typically shows degraded performances on $\mathcal{T}_0$. More formally,

$$\mathcal{L}_{\mathcal{T}_0}\left(\theta^*_{\mathcal{T}_0 \to \mathcal{T}_1}\right) > \mathcal{L}_{\mathcal{T}_0}\left(\theta^*_{\mathcal{T}_0}\right).$$

This undesirable property of deteriorating performance on the previously learned task is known as catastrophic forgetting.

In one embodiment, the task remains the same when fine-tuning the model, but the domain varies instead. The model may be sequentially exposed to a list of different domains. The model is able to adapt to each new domain without degrading its performance on the old ones. This is referred to as continual domain adaptation. Models that have been trained in accordance with embodiments of the present invention mitigate catastrophic forgetting on previously seen domains. More formally, given a task $\mathcal{T}$ that remains constant, the model may be exposed to and/or trained on a sequence of domains $D_i$, $i \in \{0,..., T\}$, each characterized by a distribution $\mathcal{P}_i$ from which specific samples $S_i$ can be drawn. Accordingly, the problem of catastrophic forgetting mentioned before can be rewritten as

$$\mathcal{L}_{\mathcal{T}}\left(\theta^*_{D_i \to D_{i+1}}\right) > \mathcal{L}_{\mathcal{T}}\left(\theta^*_{D_i}\right).$$

Each set of samples $S_i$ may become unavailable when the next domain $D_{i+1}$ with samples $S_{i+1}$ is encountered. The performance of the model may be assessed at the end of the training sequence, and for every domain $D_i$.

A naive approach to tackle the problem above is to start from the model $M_i$ obtained after training on domain $D_i$ and to fine-tune it using samples from $D_{i+1}$. Due to catastrophic forgetting, this baseline will typically perform poorly on older domains $i < T$ when it reaches the end of its training cycle. This can be regarded as an experimental lower bound.

According to an embodiment, a training objective comprises, at the same time, (i) learning a task of interest $\mathcal{T}$; (ii) mitigating catastrophic forgetting when the model is transferred to different domains; and (iii) easing adaptation to a new domain.

To achieve the second and the third goals, a number of meta-domains can be accessed, which can be used to run meta-gradient updates throughout the training procedure. The loss associated with both the original domain (the training data) and the meta-domains (described later) is enforced to be small in the points reached in the weight space, both reducing catastrophic forgetting and easing adaptation.

In specific cases, when dealing with domain $D_i$ the other domains $D_k$, $k \neq i$ cannot be accessed. Accordingly, the older domains cannot be used as meta-domains. This may be due to privacy concerns or memory constraints. Instead, meta-domains may be automatically produced using standard image transformations. Different meta-domains $D_{Aj}$, may each be defined by a set of samples $S_{Aj}$ and available for the training of the model. Training models, such as neural networks, typically involves a number of gradient descent steps to minimize a given loss (see for instance Eq. (1) for classification tasks).

According to embodiments, prior to every gradient descent step associated with the current domain, an arbitrary number of optimization steps may be simulated to minimize the losses associated with the given or available auxiliary domains. For example, a single gradient descent step can be run on each of $K$ different domains at iteration $t$, which results in $K$ different points in the weight space, defined as

$$\{\theta_{Aj}^t = \theta^t - \alpha\nabla_\theta \mathcal{L}_\mathcal{T}(S_{Aj};\ \theta^t)\}_{j=1}^K ,$$

where $A_j$ indicates the j-th auxiliary domain.

In embodiments, these weight configurations can be used to compute the loss associated with the primary domain (observed through the provided training set $S_0$) after adaptation,

$$\left\{\mathcal{L}_\mathcal{T}\left(S_0;\ \theta_{Aj}^t\right)\right\}_{j=1}^K .$$

Minimizing these loss values enforces the model to be less prone to catastrophic forgetting. Their sum may be defined as $\mathcal{L}_{recall}$. Furthermore, loss values associated with the meta-domains, observed through the auxiliary sets

$$S_{Aj},\ \left\{\mathcal{L}_\mathcal{T}\left(S_{Aj};\ \theta_{Aj}^t\right)\right\}_{j=1}^K$$

can be computed. Their sum may be defined as $\mathcal{L}_{adapt}$. These losses can be combined in any possible combinations.

In an embodiment, all losses are combined. Accordingly, the loss that is minimized at each step is:

$$\mathcal{L} := \mathcal{L}_\mathcal{T}(S_0;\theta^t) + \underbrace{\beta\tfrac{1}{K}\sum_{j=1}^K \mathcal{L}_\mathcal{T}\left(S_0;\theta_{Aj}^t\right)}_{\mathcal{L}_{recall}} + \underbrace{\gamma\tfrac{1}{K}\sum_{j=1}^K \mathcal{L}_\mathcal{T}\left(S_{Aj};\theta_{Aj}^t\right)}_{\mathcal{L}_{adapt}} \tag{2}$$

The three terms of this objective can embody the points (i), (ii) and (iii) described above (learning one task, avoiding catastrophic forgetting, and encouraging adaptation, respectively).

In the example above, only a single meta-optimization step is performed for each auxiliary domain. In this case, computing the gradients

$$\nabla_\theta \mathcal{L}_\mathcal{T}\left(\theta_{Aj}^t\right)$$

involves the computation of a gradient of a gradient, since

$$\nabla_\theta \mathcal{L}_\mathcal{T}\left(\theta_{Aj}^t\right) = \nabla_\theta \mathcal{L}_\mathcal{T}\left(\theta^t - \alpha\nabla_\theta \mathcal{L}_\mathcal{T}(\theta^t)\right).$$

In embodiments, multi-step meta-optimization procedures are performed.

During training, auxiliary domains $D_{Aj}$ are accessed. In particular, auxiliary distributions $\mathcal{P}_{Aj}$ are accessed, from which samples or sample data points can be obtained to run the meta-updates.

**Creating auxiliary domains.** An arbitrary number of auxiliary domains can be created by modifying data points, such as images, from the original training set $S_0$ via data manipulations. For example, by applying transformations, such as photometric and/or geometric transformations, to images of a training set, new training samples can be generated. The following examples will be described with respect to computer vision tasks, where image transformations are used to create the auxiliary domains. However, other data manipulations can be used for other tasks.

In an embodiment, a set of functions $\Psi$ is accessed, where each element of the set may be a specific transformation or a specific transformation with a specific magnitude level (e.g., "increased brightness by 10%"). The set of functions may cover some or all possible transformations obtained by combining N given basic functions (e.g., with N = 2, "increase brightness by 10% and then reduce contrast by 5%"). Given the so-defined set and a dataset

$$S_0 = \{(x_i, y_i)\}_{i=1}^{m} \sim \mathcal{P}_0,$$

novel data points can be generated by sampling an object from the set $T_{Aj} \sim \Psi$, and then applying it to the given data points, obtaining $S_{Aj} = \left\{\left(T_{Aj}(x_i), y_i\right)\right\}_{i=1}^{m}$.

A learning procedure according to an embodiment is detailed in Algorithm 1.

---

**Algorithm 1**: Training procedure for a single domain

---

**Input:** auxiliary transformation set $\Psi = \{T_i\}_{i=1}^{M}$, training set $S_0$, initial weights $\theta^0$, hyper-parameters $\eta$, (learning rate), $\alpha$ (meta-learning rate), $\beta$ and $\gamma$

**Output:** weights $\theta^{*=N}$

1. **Initialize** $\theta \leftarrow \theta^0$

2. **for** $t = 1, ..., N$ **do**

3.   Sample $(\hat{x}, \hat{y})$ uniformly from $S_0$    (Sample batch for meta-update)

4.   Sample $T_A$ uniformly from $\Psi$    (Sample current Auxiliary domain)

5.   $\theta_{T_A}^t \leftarrow \theta^t - \alpha \nabla_\theta \mathcal{L}_{\mathcal{T}}(T_A(\hat{x}), \hat{y}; \theta^t)$    (Run meta-gradient step)

6.   Sample $(x, y)$ uniformly from $S_0$    (Sample batch for update)

7.   $\theta^{t+1} \leftarrow \theta^t - \eta \nabla_\theta (\underbrace{\mathcal{L}_{\mathcal{T}}(x, y; \theta^t)}_{Current\ task} + \underbrace{\beta \mathcal{L}_{\mathcal{T}}(x, y; \theta_{T_A}^t)}_{Backward\ transfer} + \underbrace{\gamma \mathcal{L}_{\mathcal{T}}(T_A(x), y; \theta_{T_A}^t)}_{Forward\ transfer})$

   (Run gradient step)

---

For algorithm 1, $K$ has been set to 1, and Eq. (2) is approached via gradient descent steps-by randomly sampling one different auxiliary transformation prior to each step ($T_A$ in line 4 represents the current auxiliary domain). For clarity reasons, only one single gradient descent step is shown for the auxiliary tasks in the Algorithm box (line 4). However, the procedure is general and can be implemented with an arbitrary number of gradient descent trajectories.

**Experiments**

New protocols are defined to assess the effectiveness of lifelong learning strategies in computer vision tasks. A first experimental protocol concerns digit recognition, i.e., an image-level classification task. Although challenging, the small scale of the images and domain sets allows for an extensive ablative study. A second experimental protocol concerns semantic segmentation. By leveraging synthetic data for urban environments, the protocol considers arbitrary sequences of domains, including different cities and weather conditions, which one could observe in a real application.

An experiment that has been conducted in accordance with embodiments comprises digit recognition. Standard digit datasets broadly adopted by the computer vision community are used: MNIST (Yann Lecun, Leon Bottou, Yoshua Bengio, and Patrick Haffner: "Gradient-based learning applied to document recognition", in Proceedings of the IEEE, pages 2278-2324, 1998), SVHN (Yuval Netzer, TaoWang, Adam Coates, Alessandro Bissacco, BoWu, and Andrew Y. Ng: "Reading digits in natural images with unsupervised feature learning", in NIPS Workshop on Deep Learning and Unsupervised Feature Learning, 2011), MNIST-M and SYN (Yaroslav Ganin and Victor Lempitsky: "Unsupervised domain adaptation by backpropagation", in Proceedings of the 36th International Conference on Machine Learning (ICML), 2015). To assess lifelong learning performance, training trajectories comprise training on samples from one dataset in a first step, then training on samples from a second dataset in a second step, and so on. Given these four datasets, two distinct protocols, defined by the following sequences: MNIST $\rightarrow$ MNIST-M $\rightarrow$ SYN $\rightarrow$ SVHN and SVHN $\rightarrow$ SYN $\rightarrow$

MNIST-M → MNIST are assessed, referred to as P1 and P2, respectively. These allow assessing performance on two different scenarios, respectively: starting from easy datasets and moving to harder ones, and vice-versa. Each experiment is repeated $n = 3$ times and the averaged results and standard deviations are investigated.

For both protocols, a final accuracy is used on every test set as a metric (in [0, 1]), For compatibility, all images are resized to 32 x 32 pixels, and, for each dataset, 10,000 training samples are used. The standard PyTorch implementation of ResNet-18 is used in both protocols. The models are trained on each domain for $N = 3 \cdot 10^3$ gradient descent steps, setting the batch size to 64. An Adam optimizer is used with a learning rate $\eta = 3 \cdot 10^{-4}$, which is re-initialized with $\eta = 3 \cdot 10^{-5}$ after the first domain. For Algorithm 1, parameters are set as $\beta = \gamma = 1.0$ and $\alpha = 0.1$. One set of functions or transformations may comprise color perturbations ($\Psi_1$), one that also allows for rotations ($\Psi_2$), and one that also allows for noise perturbations ($\Psi_3$).

In an experiment, the Virtual KITTI 2 (Yohann Cabon, Naila Murray, and Martin Humenberger: "Virtual KITTI 2", arXiv:2001.10773 [cs.CV], 2020.) dataset is used to generate sequences of domains. For example, 30 simulated scenes are provided, each corresponding to one of the 5 different urban city environments and one of the 6 different weather/daylight conditions. Ground-truth for several tasks is given for each data point. In this experiment, the semantic segmentation task is investigated.

In the experiment, the most severe forgetting happens when the visual conditions change drastically. For this reason, cases where an initial model has been trained on samples from a particular scene are adapted to a novel urban environment with different condition. In concrete terms, given three urban environments A, B, C sampled from five available environments, the learning sequences are Clean → Foggy → Cloudy (P1), Clean → Rainy → Foggy (P2) and Clean → Sunset → Morning (P3) - where by "clean" it is referred to as synthetic samples cloned from the original KITTI (Andreas Geiger, Philip Lenz, and Raquel Urtasun: "Are we ready for autonomous driving? the KITTI vision benchmark suite", in Proceedings of the IEEE Conference on Computer Vision and Pattern Recognition (CVPR), 2012) scenes. For each protocol, $n = 10$ different permutations of environments A, B, C are randomly sampled and mean and variance results are calculated.

Since Virtual KITTI 2 does not provide any default train / validation / test split, for each scene / condition the first 70% of the sequence are used for training, the next 15% for validation and the final 15% for testing. Samples are used from both cameras and horizontal mirroring is used for data augmentation in every experiment. A U-Net architecture with a ResNet-34 backbone pre-trained on ImageNet may be used. The model is trained for 20 epochs on the first sequence, and for 10 epochs on the following ones. The batch size is set to 8. An Adam optimizer is used with a learning rate $\eta = 3 \cdot 10^{-4}$, which is re-initialized with $\eta = 3 \cdot 10^{-5}$ after the first domain. In accordance with Algorithm 1, the parameters for this experiment are $\beta = \gamma = 10.0$ and $\alpha = 0.01$. A transformation set or a set of functions comprising transformations for color perturbations are used. A publicly available semantic segmentation suite is used that is based on PyTorch. The performance on every domain explored during the learning trajectory is assessed, using mean intersection over union (mIoU, in [0, 1]) as a metric.

For comparison, and as a counterpart to the naive baseline, which simply fine-tunes the model as new data come along, two oracle methods are considered. If the training method allows access to every domain at every point in time, models can either be trained on samples from the joint distribution from the beginning ($P_0 \cup P_1 ... \cup P_T$, *oracle* (*all*)), or grow the distribution over iterations (first train on $P_0$, then on $P_0 \cup P_1$, etc., *oracle* (*cumulative*)). With access to samples from any domain, for what concerns assessing catastrophic forgetting, these oracles can serve the role of an upper bound for the experiments in this application.

Since image transformations are used to generate auxiliary domains, the naive baseline is enriched with such transformations using them as regular data augmentation during training (Naive +DA). Results in accordance with embodiments are compared with L2-regularization and EWC approaches, both introduced by Kirkpatrick (James Kirkpatrick, Razvan Pascanu, Neil Rabinowitz, Joel Veness, Guillaume Desjardins, Andrei A. Rusu, Kieran Milan, John Quan, Tiago Ramalho, Agnieszka Grabska-Barwinska, Demis Hassabis, Claudia Clopath, Dharshan Kumaran, and Raia Hadsell: "Overcoming catastrophic forgetting in neural networks", PNAS, 2017). Note that, for a fair comparison, these algorithms are implemented with the same data augmentation strategies that are used for creating the auxiliary domains in accordance with embodiments.

**Results:**

**Table 1:** Ablation study of the loss terms in Eq. 2. The results are averaged over 3 runs, and the models are trained using $\Psi_3$. The performance is evaluated on all domains at the end of the training sequence P1.

| Digits experiment: ablation study | | | | | |
|---|---|---|---|---|---|
| Losses | | Training Protocol: P1 | | | |
| $L_{recall}$ | $L_{adapt}$ | MNIST (1) | MNIST-M (2) | SYN (3) | SVHN (4) |
| | | .837 ± .064 | .688 ± .034 | .923 ± .004 | .869 ± .001 |
| X | | .943 ± .007 | .765 ± .006 | .944 ± .000 | .895 ± .892 |
| | X | .897 ± .005 | .746 ± .001 | .954 ± .001 | .919 ± .000 |
| X | X | .920 ± .006 | .751 ± .005 | .954 ± .003 | .919 ± .002 |

Table 1 shows results of an ablation study, where the performance is evaluated by including the different terms in the proposed loss (in Eq. 2). The performance is listed for models trained via Algorithm 1 on protocol P1. Accuracy values were computed after having trained on the four datasets. These results show that, in this setting, the first regularizer helps retaining performance on older tasks (cf. MNIST performance with and without $L_{recall}$). Without the second regularizer though, performance on late tasks is penalized (cf. performance on SYN and SVHN with and without $L_{adapt}$). The last row shows that the two terms do not conflict when used in tandem, allowing for good performance on early tasks while better adapting to new ones.

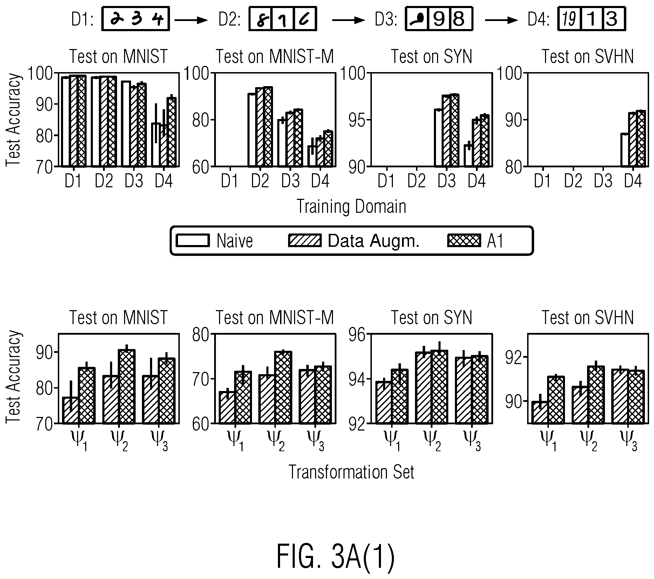

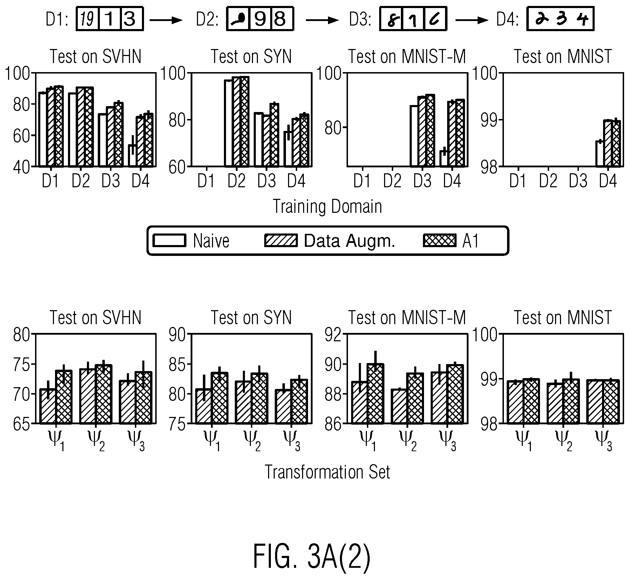

**Figure 3A** shows results related to protocols P1 (Figure 3A(1)) and P2 (Figure 3A(2)) of digit experiments. Upper plots show the performance throughout the training sequence (after having trained on each of the four domains). Lower plots show performance at the end of the training sequence for different transformation sets $\Psi_i$. **Figure 3A** (top) shows how accuracy evolves as the model is fine-tuned on each of the different domains, for the two protocols (P1 and P2, in Figure 3A(1) and Figure 3A(2) , respectively). Performance achieved with a model (A1) trained with the method according to an embodiment (A1, right bar of the three bars) is compared with the naive training procedure, with (Data Augm., middle bar) and without data augmentation (Naive, left bar).

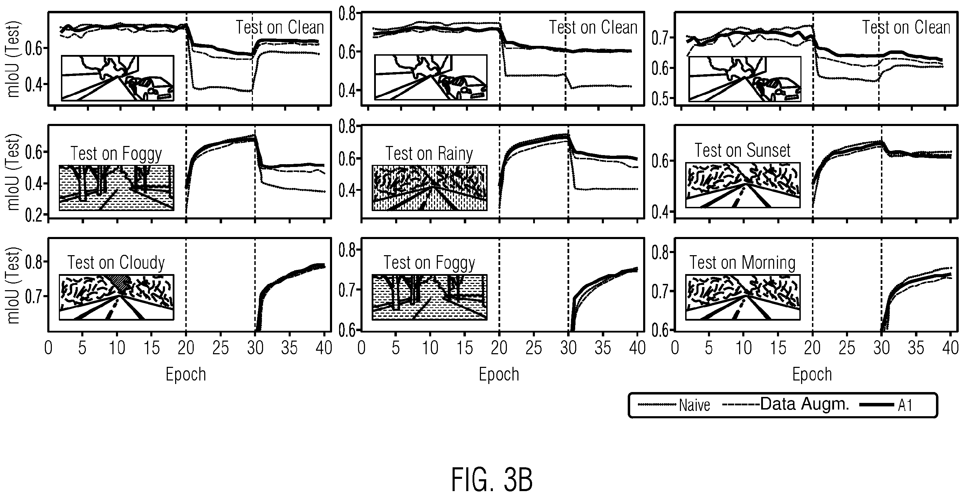

To disambiguate the contribution of the transformation sets from the contribution of the method according to an embodiment itself, **Figure 3B** (bottom) shows the performance achieved with the support of different transformation sets to generate auxiliary domains. **Figure 3B** shows KITTI results on protocols P1, P2 and P3 (left, middle and right, respectively) for models trained via non-augmented ("x") and augmented naive baseline ("+") and via Algorithm 1 ("*"). Curves are averaged across 10 random permutations of A, B, C environments. Table 3 shows the final numeric results. Results are benchmarked against the data augmentation baseline trained with the same sets. These results show that the meta-learning strategy according to an embodiment consistently outperforms the data augmentation baselines across several choices for the auxiliary set.

Table 2 shows the comparison between models trained with the method according to an embodiment, the augmented and non-augmented baselines, and the oracles and EWC / L2. The model obtained with the method according to an embodiment compares favorably with all non-oracle approaches. A testbed in which the method performs worse than a competing algorithm is SVHN in protocol P2, where L2 regularization performs better. This might be due to the fact that SVHN is a very complex domain already, with respect to the others, so it is less effective to simulate auxiliary domains from this starting point.

**Table 2:** Test accuracy results on MNIST, MNIST-M, SYN and SVHN at the end of protocols P1 (left) and P2 (right). The model obtained with the method according to an embodiment indicates results obtained via Algorithm 1. The same transformation set $\Psi_3$ was used for the method according to an embodiment and for baselines that rely on data augmentation (DA). Oracles can access data from all domains at any time during training and, thus, perform better.

| Digits experiment: comparison | | | | | | | | |
|---|---|---|---|---|---|---|---|---|
| | Protocol P1 | | | | Protocol P2 | | | |
| Method | MNIST (1) | MNIST-M (2) | SYN (3) | SVHN (4) | SVHN (1) | SYN (2) | MNIST-M (3) | MNIST (4) |
| Naive | .837 ± .064 | .688 ± .034 | .923 ± .004 | .869 ± .001 | .540 ± .058 | .749 ± .031 | .711 ± .015 | .985 ± .000 |
| Naive + DA | .834 ± .036 | .720 ± .011 | .950 ± .003 | .914 ± .001 | .723 ± .009 | .808 ± .006 | .895 ± .006 | .990 ± .000 |

(continued)

| Digits experiment: comparison | | | | | | | |
|---|---|---|---|---|---|---|---|
| | Protocol P1 | | | | Protocol P2 | | | |
| Method | MNIST (1) | MNIST-M (2) | SYN (3) | SVHN (4) | SVHN (1) | SYN (2) | MNIST-M (3) | MNIST (4) |
| L2 [21] + DA | .859 ± . 028 | .718 ± . 018 | .954 ± .002 | .914 ± . 001 | .753 ± . 014 | .820 ± .013 | .894 ± . 009 | .988 ± . 000 |
| EWC [21] + DA | .872 ± . 018 | .707 ± . 010 | .954 ± .003 | .918 ± . 001 | .733 ± . 005 | .805 ± .008 | .898 ± . 006 | .988 ± . 001 |
| Model of embodiment | .920 ± . 006 | .751 ± . 005 | .953 ± .003 | .919 ± . 002 | .738 ± . 021 | .824 ± .011 | .901 ± . 001 | .990 ± . 001 |
| | | | | | | | | |
| Oracle (all) | .998 ± . 000 | .934 ± . 004 | .971 ± .002 | .899 ± . 005 | .899 ± . 005 | .971 ± .002 | .934 ± . 004 | .998 ± . 000 |
| Oracle (cumul.) | .998 ± . 001 | .933 ± . 002 | .966 ± .001 | .886 ± . 007 | .902 ± . 002 | .970 ± .001 | .925 ± . 001 | .985 ± . 001 |

Table 3 shows results related to protocols P1, P2 and P3 (left, middle and right, respectively), and the respective curves in Figure 3B from an experiment related to semantic scene segmentation. Algorithm 1 (A1) is compared with augmented and non-augmented naive baselines (DA and N. rows, respectively). Also in these settings, heavy data augmentation proved to be effective to better remember the previous domains. In general, using Algorithm 1 allows for better or comparable performance using the same transformation set. Models obtained with the method according to an embodiment are less effective when the domain shift is less pronounced (P3). In this case, neither data augmentation nor the model according to Algorithm 1 provide the same benefit that can be observed in the other protocols, or in the experiment on digits (Table 2).

**Table 3:** Mean intersection over union (mIoU) results on the domains that characterize protocols P1, P2 and P3 at the end of the training sequences (left, middle and right, respectively). N. and DA are the non-augmented and augmented baselines.

| Semantic segmentation experiment | | | | | | | | |
|---|---|---|---|---|---|---|---|---|
| | Protocol P1 | | | Protocol P2 | | | Protocol P3 | | |
| | Clean (1) | Foggy (2) | Cloudy (3) | Clean (1) | Rainy (2) | Foggy (3) | Clean (1) | Sunset (2) | Mornin g (3) |
| N. | .566 ± . 151 | .345 ± . 097 | .787 ± . 101 | .413 ± . 137 | .403 ± . 128 | .753 ± . 191 | .603 ± . 115 | .636 ± . 077 | .760 ± . 100 |
| DA | .619 ± . 088 | .461 ± . 086 | .787 ± . 089 | .596 ± . 087 | .538 ± . 113 | .754 ± . 091 | .614 ± . 081 | .623 ± . 081 | .734 ± . 099 |
| A1 | .632 ± . 078 | .511 ± . 081 | .793 ± . 103 | .598 ± . 088 | .590 ± . 105 | .748 ± . 096 | .626 ± . 092 | .615 ± . 087 | .745 ± . 112 |

While some specific embodiments have been described in detail above, it will be apparent to those skilled in the art that various modifications, variations, and improvements of the embodiments may be made in light of the above teachings and within the content of the appended claims without departing from the intended scope of the embodiments. In addition, those areas in which it is believed that those of ordinary skill in the art are familiar have not been described herein in order to not unnecessarily obscure the embodiments described herein. Accordingly, it is to be understood that the embodiments are not to be limited by the specific illustrative embodiments, but only by the scope of the appended claims.

Although the above embodiments have been described in the context of method steps, they also represent a description of a corresponding component, module or feature of a corresponding apparatus or system.

Some or all of the method steps may be implemented by a computer in that they are executed by (or using) a processor, a microprocessor, an electronic circuit or processing circuitry.

The embodiments described above may be implemented in hardware or in software. The implementation can be performed using a non-transitory storage medium such as a computer-readable storage medium, for example a floppy disc, a DVD, a Blu-Ray, a CD, a ROM, a PROM, and EPROM, an EEPROM or a FLASH memory. Such computer-readable media can be any available media that can be accessed by a general-purpose or special-purpose computer system.

Generally, embodiments can be implemented as a computer program product with a program code or computer-executable instructions, the program code or computer-executable instructions being operative for performing one of the methods when the computer program product runs on a computer. The program code or the computer-executable instructions may be stored on a computer-readable storage medium.

In an embodiment, a storage medium (or a data carrier, or a computer-readable medium) comprises, stored thereon, the computer program or the computer-executable instructions for performing one of the methods described herein when it is performed by a processor. In a further embodiment, an apparatus comprises one or more processors and the storage medium mentioned above.

In a further embodiment, an apparatus comprises means, for example processing circuitry such as, e.g., a processor communicating with a memory, the means being configured to, or adapted to perform, one of the methods described herein.

A further embodiment comprises a computer having installed thereon the computer program or instructions for performing one of the methods described herein.

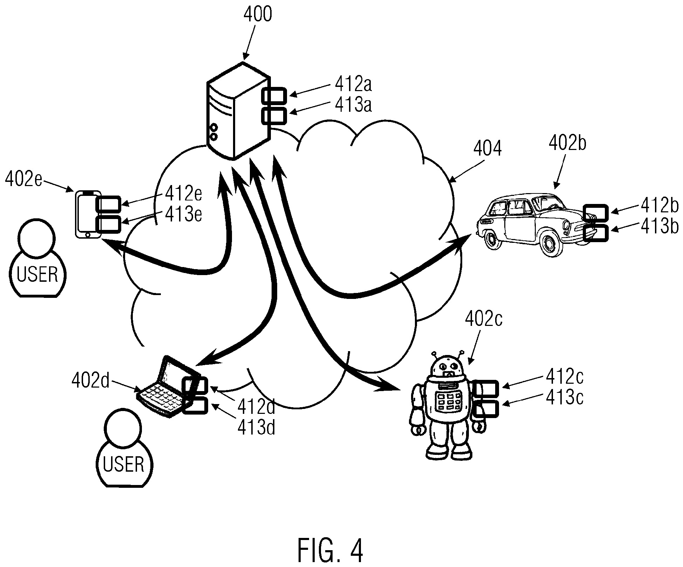

The above-mentioned methods and embodiments may be implemented within an architecture such as that illustrated in **Figure 4,** which comprises server 400 and one or more client devices 402 that communicate over a network 404 (which may be wireless and / or wired) such as the Internet for data exchange. Server 400 and the client devices 402 include a data processor 412 and memory 413 such as a hard disk. The client devices 402 may be any device that communicates with server 400, including autonomous vehicle 402b, robot 402c, computer 402d, or cell phone 402e.

More precisely in an embodiment, the method according to the embodiment of **Figure 1** may be performed at server 400 for a task in a plurality of domains. For example, the task may be the recognition of images or features of images in a domain (e.g., an image categorizer used by an application on robot 402c, autonomous vehicle 402b or cell phone 402e to identify streets in sunny weather, rainy weather, or foggy weather as shown in Figure 2). Advantageously, the method may be used to add new domains or refine domains over time, while minimizing catastrophic forgetting of domains learned earlier in time. Other examples of tasks may be natural language understanding, search and translation. In other embodiments, the methods according to the embodiments of **Figure 1** may be performed at client device 402 partially or completely. In yet other embodiments, the methods may be performed at a different server or on a plurality of servers in a distributed manner.

A novel meta-learning approach that can easily be applicable when a model needs to be sequentially adapted to different domains is disclosed. The method is based on the concept of "auxiliary domains". Further new benchmarks to assess lifelong learning strategies for computer vision research are disclosed.

According to an aspect, the method may comprise designing effective auxiliary sets that significantly improve adaptation to more diverse domains. Further, in an aspect, the method may comprise "learning to optimize" strategies that proved to be effective, e.g., in few-shot learning.

Similar to all methods tackling continual learning, the need of re-training a new computer vision model from scratch every time new data points become available is avoided. This is more efficient in terms of memory and of computational cost. This translates into a reduced number of GPU-hours for training, and hence a positive environmental impact. Moreover, unlike most standard continual learning strategies, the present invention does not require storing previously encountered training samples. One might desire or be legally required to delete sensitive data after the model has processed them. A model trained in accordance with the present invention is explicitly designed for this scenario. This approach can be useful for cases where privacy or memory constraints are strong, and a small decrease in accuracy has only limited consequences.

## Claims

1. A computer-implemented method (100) for training a neural network model for sequentially learning a plurality of domains associated with a task, the computer-implemented method (100) comprising:

   determining (130) at least one set of auxiliary model parameters by simulating at least one first optimization step based on a set of current model parameters and at least one auxiliary domain, wherein the at least one auxiliary domain is associated with a primary domain comprising one or more data points for training a neural network model;

determining (150) a set of primary model parameters by performing a second optimization step based on the set of current model parameters and the primary domain and based on the at least one set of auxiliary model parameters and at least one of the primary domain and the at least one auxiliary domain; and
updating (160) the neural network model with the set of primary model parameters.

2. The computer-implemented method of claim 1 further comprising generating (120) the at least one auxiliary domain from the primary domain, wherein the generating the at least one auxiliary domain from the primary domain comprises modifying (124) the one or more data points of the primary domain via data manipulation, and wherein the at least one auxiliary domain comprises the one or more modified data points.

3. The computer-implemented method of claim 2, wherein the data manipulation is performed automatically, and/or wherein the generating the at least one auxiliary domain from the primary domain comprises selecting (122) the one or more data points from the primary domain, and/or
wherein the modifying (124) the one or more data points of the primary domain via data manipulation comprises automatically and/or randomly selecting one or more transformations from a set of transformations, wherein each auxiliary domain of the at least one auxiliary domain is defined by one or more respective transformations of the set of transformations.

4. The computer-implemented method of claim 2 or claim 3, wherein the data manipulation comprises at least one image transformation, and wherein the at least one image transformation comprises at least one of a photometric and a geometric transformation.

5. The computer-implemented method of one of claims 1 to 4, wherein a loss function associated with the second optimization step comprises:

(i) a first loss function associated with the set of current model parameters and the primary domain, and at least one of:
(ii) a second loss function associated with the at least one set of auxiliary model parameters and the primary domain, and
(iii) a third loss function associated with the at least one set of auxiliary model parameters and the at least one auxiliary domain.

6. The computer-implemented method of one of claims 1 to 5 further comprising initializing (110) the neural network model, wherein initializing the neural network model comprises setting model parameters of a pre-trained neural network model as initial model parameters for the neural network model to fine-tune the pre-trained neural network model.

7. The computer-implemented method of one of claims 1 to 6, wherein the method further comprises:

selecting a first sample or a first batch of samples from the auxiliary domain for the determining at least one set of auxiliary model parameters; and
selecting a second sample or a second batch of samples from the primary domain and at least one of selecting a third sample or a third batch of samples from the primary domain and selecting a fourth sample or a fourth batch of samples from the at least one auxiliary domain for the determining a set of primary model parameters.

8. The computer-implemented method of one of claims 1 to 7, wherein a set of auxiliary model parameters of the at least one set of auxiliary model parameters minimizes a respective loss associated with a respective auxiliary domain of the at least one auxiliary domain with respect to the set of current model parameters, and/or
wherein the set of primary model parameters minimizes a loss associated with the at least one set of auxiliary model parameters and at least one of the primary domain and the at least one auxiliary domain with respect to the current model parameters.

9. The computer-implemented method of one of claims 1 to 8, wherein the steps of determining at least one set of auxiliary model parameters, determining a set of primary model parameters and updating the neural network model are repeated until at least one of a gradient descent step size for the second optimization is below a threshold and a maximum number of gradient descent steps is reached.

10. The computer-implemented method of one of claims 1 to 9, wherein at least one of the at least one first optimization step comprises at least one gradient descent step and the second optimization step comprises a gradient descent step.

11. The computer-implemented method of one of claims 1 to 10, wherein the one or more data points of the primary domain comprise or are divided into a first set of data points for training the neural network model, a second set of data points for validating the neural network model and a third set of data points for testing the neural network model.

12. The computer-implemented method of one of claims 1 to 11, wherein the neural network model is trained on the one or more data points of the primary domain being a first primary domain in a first step, and wherein the trained neural network model is subsequently trained on data points of a second primary domain in a second step without accessing data points of the first primary domain in the second step, and/or
wherein the neural network model is trained by empirical risk minimization, ERM.

13. A neural network trained in accordance with the method of claim 12 to perform the task in the first primary domain and the second primary domain.

14. A computer-readable storage medium (413) having computer-executable instructions stored thereon, which, when executed by one or more processors (412) perform the method of one of claims 1 to 12.

15. An apparatus (400, 402) comprising one or more processors (412), the one or more processors (412) being configured to perform the method of one of claims 1 to 12.

<u>100</u>

```
                                                              ┌─110
┌─────────────────────────────────────────────┐
│              initializing a model             │
└─────────────────────────────────────────────┘
                      │
                      ▼                          ┌─120
┌─────────────────────────────────────────────┐
│         generating at least one auxiliary domain │
│                                               │  ┌─122
│    ┌──────────────────────────────────────┐  │
│    │   selecting a sample from a primary domain │◄─
│    └──────────────────────────────────────┘  │
│                                               │  ┌─124
│    ┌──────────────────────────────────────┐  │
│    │        modifying the selected sample    │  │
│    └──────────────────────────────────────┘  │
└─────────────────────────────────────────────┘
                      │                          ┌─130
                      ▼
┌─────────────────────────────────────────────┐
│  determining auxiliary model parameters based on the │
│                 modified sample               │
└─────────────────────────────────────────────┘
                      │                          ┌─140
                      ▼
┌ ─ ─ ─ ─ ─ ─ ─ ─ ─ ─ ─ ─ ─ ─ ─ ─ ─ ─ ─ ─ ─ ─┐
│       selecting a sample from the primary domain │
└ ─ ─ ─ ─ ─ ─ ─ ─ ─ ─ ─ ─ ─ ─ ─ ─ ─ ─ ─ ─ ─ ─┘
                      │                          ┌─150
                      ▼
┌─────────────────────────────────────────────┐
│   determining primary model parameters based at least │
│       in part on the auxiliary model parameters │
└─────────────────────────────────────────────┘
                      │                          ┌─160
                      ▼
┌─────────────────────────────────────────────┐
│    updating a model with the primary model parameters │
└─────────────────────────────────────────────┘
                      │                          ┌─170
                      ▼
┌─────────────────────────────────────────────┐
│             providing the trained model       │
└─────────────────────────────────────────────┘
```

164

162

FIG. 1

FIG. 2

FIG. 3A(1)

FIG. 3A(2)

FIG. 3B

FIG. 4

Europäisches
Patentamt

European
Patent Office

Office européen
des brevets

## EUROPEAN SEARCH REPORT

Application Number

EP 20 30 6458

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DA LI ET AL: "Sequential Learning for Domain Generalization", ARXIV.ORG, CORNELL UNIVERSITY LIBRARY, 201 OLIN LIBRARY CORNELL UNIVERSITY ITHACA, NY 14853, 3 April 2020 (2020-04-03), XP081635847, * abstract * * Algorithm 1 * * section 4 * | 1-15 | INV. G06N3/08 |
| X | ZHIQIANG TANG ET AL: "OnlineAugment: Online Data Augmentation with Less Domain Knowledge", ARXIV.ORG, CORNELL UNIVERSITY LIBRARY, 201 OLIN LIBRARY CORNELL UNIVERSITY ITHACA, NY 14853, 22 August 2020 (2020-08-22), XP081746338, * abstract; figures 1,2 * * Algorithm 1 * * section 3 * | 1-15 | |
| X | DA LI ET AL: "Learning to Generalize: Meta-Learning for Domain Generalization", ARXIV.ORG, CORNELL UNIVERSITY LIBRARY, 201 OLIN LIBRARY CORNELL UNIVERSITY ITHACA, NY 14853, 10 October 2017 (2017-10-10), XP080827512, * abstract; figure 1 * * Agorithm 1 * * section "Methodology" * | 1-15 | TECHNICAL FIELDS SEARCHED (IPC) G06N |

-/--

The present search report has been drawn up for all claims

| Place of search | Date of completion of the search | Examiner |
|---|---|---|
| Munich | 23 June 2021 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 20 30 6458

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RAJASEGARAN JATHUSHAN ET AL: "iTAML: An Incremental Task-Agnostic Meta-learning Approach", 2020 IEEE/CVF CONFERENCE ON COMPUTER VISION AND PATTERN RECOGNITION (CVPR), IEEE, 13 June 2020 (2020-06-13), pages 13585-13594, XP033804654, DOI: 10.1109/CVPR42600.2020.01360 [retrieved on 2020-08-03] * abstract; figure 1 * ----- | 1-15 | |
| A | HANKOOK LEE ET AL: "Self-supervised Label Augmentation via Input Transformations", ARXIV.ORG, CORNELL UNIVERSITY LIBRARY, 201 OLIN LIBRARY CORNELL UNIVERSITY ITHACA, NY 14853, 29 June 2020 (2020-06-29), XP081680388, * abstract; figure 1 * ----- | 1-15 | |

TECHNICAL FIELDS
SEARCHED    (IPC)

The present search report has been drawn up for all claims

| Place of search | Date of completion of the search | Examiner |
|---|---|---|
| Munich | 23 June 2021 | Kopilovic, Ivan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAVID LOPEZ-PAZ ; MARC'AURELIO RANZATO.** Gradient Episodic Memory for Continual Learning. *Proceedings of Advances in Neural Information Processing Systems (NIPS),* 2017
- **YANN LECUN ; LEON BOTTOU ; YOSHUA BENGIO ; PATRICK HAFFNER.** Gradient-based learning applied to document recognition. *Proceedings of the IEEE,* 1998, 2278-2324
- **YUVAL NETZER ; TAOWANG ; ADAM COATES ; ALESSANDRO BISSACCO ; BOWU ; ANDREW Y. NG.** Reading digits in natural images with unsupervised feature learning. *NIPS Workshop on Deep Learning and Unsupervised Feature Learning,* 2011
- **YAROSLAV GANIN ; VICTOR LEMPITSKY.** Unsupervised domain adaptation by backpropagation. *Proceedings of the 36th International Conference on Machine Learning (ICML),* 2015
- **YOHANN CABON ; NAILA MURRAY ; MARTIN HUMENBERGE.** Virtual KITTI 2. *arXiv:2001.10773 [cs.CV,* 2020
- **ANDREAS GEIGER ; PHILIP LENZ ; RAQUEL URTASUN.** Are we ready for autonomous driving? the KITTI vision benchmark suite. *Proceedings of the IEEE Conference on Computer Vision and Pattern Recognition (CVPR),* 2012
- **JAMES KIRKPATRICK ; RAZVAN PASCANU ; NEIL RABINOWITZ ; JOEL VENESS ; GUILLAUME DESJARDINS ; ANDREI A. RUSU ; KIERAN MILAN ; JOHN QUAN ; TIAGO RAMALHO ; AGNIESZKA GRABSKA-BARWINSKA.** Overcoming catastrophic forgetting in neural networks. *PNAS,* 2017